Europäisches Patentamt

European Patent Office

Office européen des brevets

(19)

(11) Publication number: **0 221 735 B1**

(12) **EUROPEAN PATENT SPECIFICATION**

(45) Date of publication of patent specification: **18.12.91**   (51) Int. Cl.5: **H02K  41/035**

(21) Application number: **86308267.3**

(22) Date of filing: **23.10.86**

(54) Linear motors.

(30) Priority: **28.10.85 JP 241144/85**

(43) Date of publication of application:
**13.05.87 Bulletin  87/20**

(45) Publication of the grant of the patent:
**18.12.91 Bulletin  91/51**

(84) Designated Contracting States:
**AT DE FR GB NL**

(56) References cited:
**DE-A- 3 226 243**

**FEINWERKTECHNIK & MESSTECHNIK, vol. 88, no. 4, June 1980, pages 177-182, München; H. MOCZALA "Bürstenlose Gleichstrom-Linearmotoren kleiner Leistung mit gegenüber dem Ständer kurzen Läufern"**

**PATENT ABSTRACTS OF JAPAN, vol. 9, no. 106 (E-313)[1829], 10th May 1985; & JP - A - 59 230 460 (YOSHITERU TAKAHASHI) 25-12-1984**

(73) Proprietor: **SONY CORPORATION
7-35 Kitashinagawa 6-Chome Shinagawa-ku
Tokyo 141(JP)**

(72) Inventor: **Niikura, Hideo
Patents Div. Sony Corp. 6-7-35
Kitashinagawa
Shinagawa-ku Tokyo 141(JP)**

(74) Representative: **Thomas, Christopher Hugo et al
D Young & Co 10 Staple Inn
London WC1V 7RD(GB)**

## Description

This invention relates to linear motors. Embodiments of the invention are particularly, but not exclusively, suitable for driving movable parts in electronic equipment, for example, for driving a head or optical pick-up used in a disc player.

A moving-coil type linear motor as shown in Figure 1 of the accompanying drawings is known, for example from US patent specification US-A-4 439 699. In Figure 1, a core 2 connects the centre portions of one pair of opposite sides of a box frame forming a yoke 1. A bobbin 4 on which a coil 3 is wound and which loosely fits on the core 2 is movable in the directions of arrows a and b. Magnets 5 and 6 which are magnetized in the thickness directions thereof, are attached to the respective inner faces of the other pair of opposite sides of the yoke 1. When an electric current is supplied to the coil 3, the coil 3 and the bobbin 4 move in the direction of the arrow a or the arrow b.

However, there are several problems with the above linear motor:

(1) The coil 3 moves within a gap Lg between the magnets 5 and 6 and the core 2, and the width of the gap Lg and the thickness Lm of the magnets 5 and 6 are usually similar. As a result, the magnetic flux density of the magnets 5 and 6 is only about one-third to one-fourth of the residual flux density of the magnets 5 and 6. Therefore the magnetic intensities of the magnets 5 and 6 are not fully utilized.

(2) The magnetic flux is concentrated at the four corners of the yoke 1. Therefore, if the thickness of the yoke 1 is decided on the basis of the corners, the yoke 1 becomes rather large.

(3) As the magnetic flux generated by the current supplied to the coil 3 follows the loop formed by the yoke 1 and the core 2, the self-inductance of the coil 3 becomes large, so that the electric current decreases when the bobbin 4 is to be moved at high speed. Therefore, the thrust is reduced and the response falls off.

(4) The bobbin 4 around which the coil 3 is wound is usually made of a material which is a poor heat conductor, so that the heat generated in the coil 3 is not efficiently dissipated.

(5) The fitting of the core 2 into the bobbin 4 makes the assembly work difficult.

Feinwerktechnik & Messtechnik, Vol 88, No 4, June 1980, pages 177-182 discloses a linear motor comprising a first yoke, a second yoke spaced by a first gap of predetermined width from the first yoke, two coils would around respective cores which are parts of the first and second yokes respectively, and a magnet in opposed relation to and spaced by a second gap of predetermined width from the first and second yokes.

According to the present invention there is provided a linear motor comprising:
a first yoke;
a second yoke spaced by a first gap of predetermined width from said first yoke;
a magnet in opposed relation to and spaced by a second gap of predetermined width from said first and second yokes;
a third yoke spaced by a third gap from said first and second yokes; and
a base plate to which said first and second yokes are secured and which has a guide portion for guiding a guided portion of said third yoke;
wherein respective coils are wound around said first yoke and said second yoke.

According to the present invention there is also provided a linear motor comprising:
a first yoke;
a second yoke spaced by a first gap of predetermined width from said first yoke;
a coil wound around at least one of said first yoke and said second yoke; and
a magnet in opposed relation to and spaced by a second gap of predetermined width from said first and second yokes;
wherein an end portion of said magnet extends over said first gap and is positioned in opposed relation with not only one of said first and second yokes, but also a part of the other thereof when said magnet is in an end or starting position.

According to the present invention there is also provided a linear motor comprising:
a first yoke;
a second yoke spaced by a first gap of predetermined width from said first yoke;
a coil wound around at least one of said first yoke and said second yoke; and
a magnet in opposed relation to and spaced by a second gap of predetermined width from said first and second yokes;
wherein said coil is wound around said first yoke, and a third yoke is spaced by a third gap from said first and second yokes.

According to the present invention there is also provided a linear motor comprising:
a first yoke;
a second yoke spaced by a first gap of predetermined width from said first yoke;
a third yoke of substantially U-shaped section;
said first yoke and said second yoke being arranged within said third yoke;
two connecting members connecting one of the parallel flanges of said third yoke to said first yoke and said second yoke, respectively;
two coils respectively wound around said connecting members; and
a magnet spaced from and movable between the other of said parallel flanges of said third yoke and said first and second yokes.

According to the present invention there is also provided a linear motor comprising:
a first yoke;
a second yoke spaced by a first gap of predetermined width from said first yoke;
a member of non-magnetic material connecting said first yoke to said second yoke;
a magnet spaced by a second gap of predetermined width from and arranged in opposed relation to said first yoke and said second yoke; and
a third yoke to which said magnet is fixed and in each end portion of which a core is provided on which a respective coil is wound.

According to the present invention there is also provided a linear motor comprising:
a first yoke and a second yoke spaced by a first gap from each other;
a magnet spaced by a second gap from and arranged in opposed relation to said first yoke and second yoke;
a coil fixed to the end of said magnet through a non-magnetic material;
a third yoke and a fourth yoke spaced from each other by a gap of the same width as said first gap and so arranged in opposed relation to said magnet as to be spaced apart by a gap of the same width as that of said second gap from said magnet; and
a member of non-magnetic material of substantially U-shaped section connecting said first and second yokes to said third and fourth yokes.

According to the present invention there is also provided a linear motor comprising:
a yoke unit including a first yoke which a coil surrounds, and a second yoke so arranged as to be in the same plane with and spaced apart the width of a first gap from said first yoke; and
a magnet spaced apart the width of a second gap from and arranged in opposed relation to said yoke unit;
a plurality of said yoke units being spaced apart by the same width as that of said first gap from one another and arranged in a row or two-dimensionally.

The invention will now be described by way of example with reference to the accompanying drawings throughout which like parts are referred to by like references, and in which:
Figure 1 is a perspective view of a known linear motor;
Figure 2 is an exploded, perspective view of an embodiment of linear motor according to this invention;
Figure 3 is a perspective view of the linear motor of Figure 2;
Figure 4 is a side view of the linear motor of Figure 3;

Figures 5 and 6 are side views of a gap for illustrating two kinds of section, respectively;
Figures 7 and 8 are schematic side views of respective second and third embodiments of linear motor according to this invention;
Figure 9 is a perspective view of a fourth embodiment of linear motor according to this invention;
Figure 10 is a schematic side view of the linear motor of Figure 9;
Figure 11 is a perspective view of a fifth embodiment of linear motor according to this invention;
Figure 12 is a perspective view of a sixth embodiment of linear motor according to this invention;
Figure 13 is a schematic side view of the linear motor of Figure 12;
Figure 14 is a perspective view of a seventh embodiment of linear motor according to this invention;
Figure 15 is a perspective view of an eighth embodiment of linear motor according to this invention;
Figure 16 is a schematic side view of the linear motor of Figure 15; and
Figure 17 is a sectional view of a ninth embodiment of linear motor according to this invention.

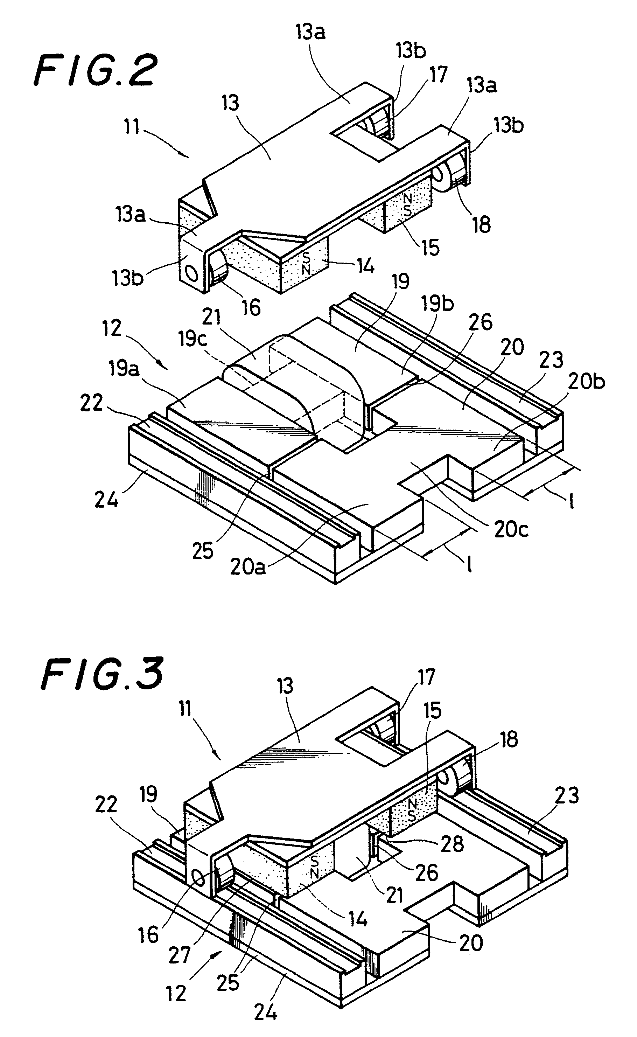

The first embodiment shown in Figures 2 and 3 is a linear motor of moving-magnet type comprising a movable portion 11 and a fixed portion 12. The movable portion 11 includes a plate yoke 13 and a pair of magnets 14 and 15 which are fixed to the lower surface of the yoke 13 and are magnetized in the thickness directions thereof as shown in Figures 2 and 3. Formed in the sides of the yoke 13 are a plurality of arms 13a. In the ends of the arms 13a there are bent portions, to which respective rollers 16, 17 and 18 are rotatably secured.

The fixed portion 12 includes a pair of yokes 19 and 20, and a coil 21 wound around the yoke 19. Provided adjacent to each side of the yokes 19 and 20 are respective guide rails 22 and 23, on which the rollers 16, 17 and 18 can roll. The yokes 19 and 20 and the guide rails 22 and 23 are fixed to a base plate 24, for example, by adhesive.

The yokes 19 and 20 each have two portions 19a and 19b, and 20a and 20b respectively, of width 1 which are provided in opposed relation to the respective magnets 14 and 15, and a connecting portion 19c or 20c to join the portions 19a and 19b, or 20a and 20b. The coil 21 is wound around the connecting portion 19c. The sides of the portions 19a and 19b of the yoke 19 are respective aligned with the sides of the portions 20a and 20b of the yoke 20, and between the portions 19a and 20a, and the portions 19b and 20b, there are respective air gaps 25 and 26 which are about 0.2 to 0.5 mm in width. When the rollers 16, 17 and 18 are rotatably fitted in the guide rails 22 and 23 so as to position the movable portion 11 over the fixed portion 12, air gaps 27 and 28 formed between the magnet 14 and the portions 19a and 20a of the yokes 19 and 20, and between the magnet 15 and the portions 19b and 20b of the yokes 19 and 20 are about 0.2 to 0.5 mm in width.

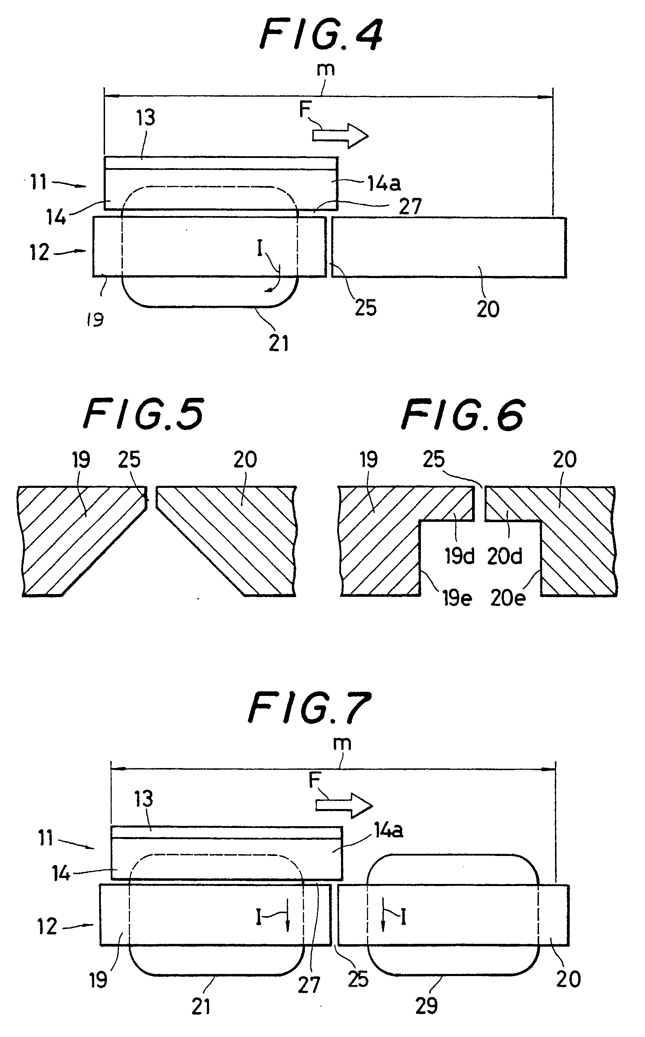

In Figure 4, the movable portion 11 is in a starting position. The greater parts of the magnets 14 and 15 are located in opposed relation to the yoke 19, and the front end parts 14a and 15a thereof extend over the gaps 25 and 26 in opposed relation to a small part of the yoke 20. Therefore, the greater part of the magnetic flux generated by the magnets 14 and 15 follows the gaps 27 and 28 and the yoke 19, and the rest of the magnetic flux follows the gaps 27 and 28 and the yoke 20, so that the movable portion 20 moves in the direction of the arrow in Figure 4, which indicates the direction of a force F mentioned later.

As the movable portion 11 moves, the area where the magnets 14 and 15 and the yoke 19 are in opposed relation to each other decreases, and the area where the magnets 14 and 15 and the yoke 20 are in opposed relation to each other increases, so that the magnetic flux passing through the yoke 19 decreases and the magnetic flux passing through the yoke 20 increases.

Assuming that the leakage of the magnetic flux passing through the yokes 19 and 20 is small when the movable portion 11 is moved by a distance $\Delta x$, the increment $\Delta \Phi$ of the magnetic flux passing through the yoke 19 is given by:

$$\Delta \Phi = B.\Delta x.1$$

where B is the flux density. The force F acting between the magnets 14 and 15 and the yoke 19 is given by:

$$F = N.I.\frac{\delta \Phi}{\delta x}$$

where N is the number of turns of the coil 21 and I is the current strength. As the rate of flux change $\frac{\delta \Phi}{\delta x}$ is constant until the magnets 14 and 15 leave the coil 21, the force F is given by:

$$F = N.I.\frac{\delta \Phi}{\delta x} = N.I.B.I (= \text{a constant})$$

If the electric current is reversed, the force F acts in the reverse sense.

Thus, the rate of magnetic flux change can be kept constant even although the movable portion 11 moves, because the gaps 25 and 26 are provided between the yokes 19 and 20. The movable portion 11 is movable within a range m by the force F generated in proportion to the rate of flux change. The rate of flux change would still be constant even if the yoke 20 were omitted, but in that case the movable portion 11 would be affected by the attracting force acting between the yoke 19 and the magnets 14 and 15 in the sense reverse to that of the force F. In this embodiment, therefore, the yoke 20 is spaced from the yoke 19 by the width of the gaps 25 and 26, so that not only the rate of flux change is constant, but also the attracting forces of the magnets 14 and 15 are constant. Therefore, the movable portion 11 moves without being influenced by the attracting forces.

With this embodiment, the following effects are obtainable:

(1) By making the gaps 27 and 28 small, so as to make the flux density within the gaps 27 and 28 large, the magnetic intensity of the magnets 14 and 15 is effectively utilized.

(2) There is no place where the magnetic flux concentrates, so it is unnecessary to make the thicknesses of the yokes 19 and 20 large. Therefore, it is easy to make the movable portion 11 and the fixed portion 12 small.

(3) By making the connecting portion 19c, which the coil 21 surrounds, sufficiently small in cross-section for it not to be saturated with the magnetic flux, it is possible to make the resistance Rm of the coil 21 small without changing the number of turns of the coil 21. Therefore, even although the input power Pin ($= Rm.I^2$) is unchanged, a greater thrust is obtained.

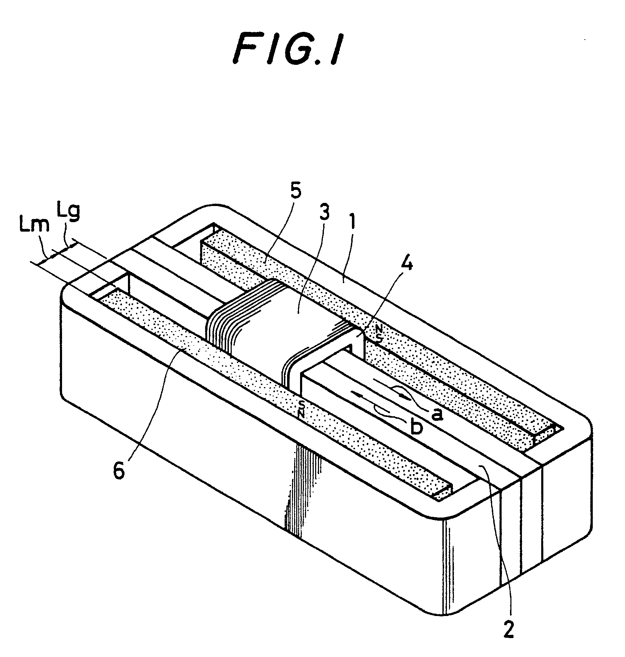

(4) The magnetic circuit followed by the magnetic flux generated by the coil 21 includes the gaps 27 and 28, so that it is possible to make the self-inductance of the coil 21 small as compared with that of the coil of the moving-coil type linear motor shown in Figure 1. Therefore, it is easy to make a linear motor having an excellent response.

(5) As the coil 21 is wound around the connecting portion 19c which is a part of the yoke 19, the cooling efficiency of the coil 21 is improved, so that input power can be increased so as to make the thrust larger.

(6) It is easy to assemble the linear motor.

Figures 5 and 6 show two examples of sections of the gaps 25 and 26. The gaps 25 and 26 must be so formed as to make the leakage flux out of the yokes 19 and 20 as small as possible, and to make the rate of flux change $\frac{\delta \Phi}{\delta x}$ constant. To make the rate of flux change almost constant and not be influenced by the attracting force, the gaps 25 and 26 are so formed as to enable the yokes 19 and 20 to be partially brought near to each other but with the rest of the yokes 19 and 20 separated. Thus, the gaps 25 and 26 may be formed to have a section of almost triangular shape as shown in Figure 5 or a section consisting of a projecting portion 19d or 20d and a stepped portion 19e or 20e as shown in Figure 6.

Figure 7 schematically shows the second embodiment of this invention, wherein coils 21 and 29 are provided around the yokes 19 and 20 respectively. the coil 29 surrounds the connecting portion 20c of the yoke 20, similarly to the coil 19. In this embodiment, the movable portion 11 is acted on by the force F = 2.N.B.I.l and moves within the range m.

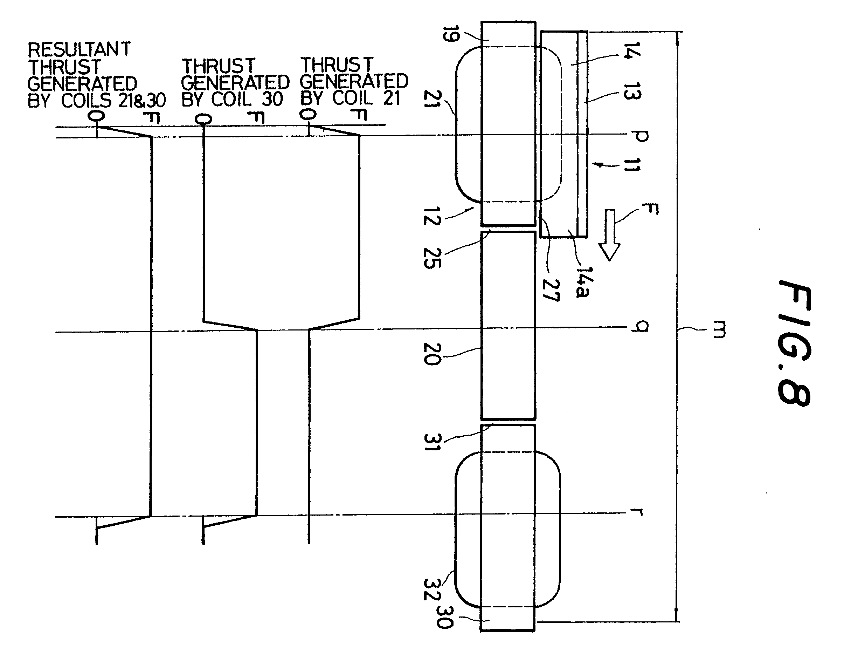

Figure 8 shows the third embodiment, wherein three yokes 19, 20 and 30 are arranged in line, gaps 25 and 31 are provided between the yokes 19 and 20 and the yokes 20 and 30 respectively, and a coil 32 is wound around the connecting portion of the yoke 30. The yoke 30 is of the same shape as the yokes 19 and 20.

In this embodiment, the movable portion 11 is moved by a force generated by the coil 21 from a point p to a point q, and is moved by a force generated by the coil 32 from the point q to a point r. Therefore, the thrust acting on the movable portion 11 is a resultant force that is the sum of the forces generated by the coils 21 and 32. In this embodiment, the range m of the movable portion 11 is about twice as much as the case of the first or the second embodiment. By alternately arranging aligned yokes 19 with coils 21 and yokes 20 without a coil as shown in Figure 8, it is easy to make the range m of the movable portion 11 larger. Moreover, by two-dimensionally arranging the yokes 19 and 20 in this way, it is also easy to make the movable range of the moved portion 11 two-dimensional.

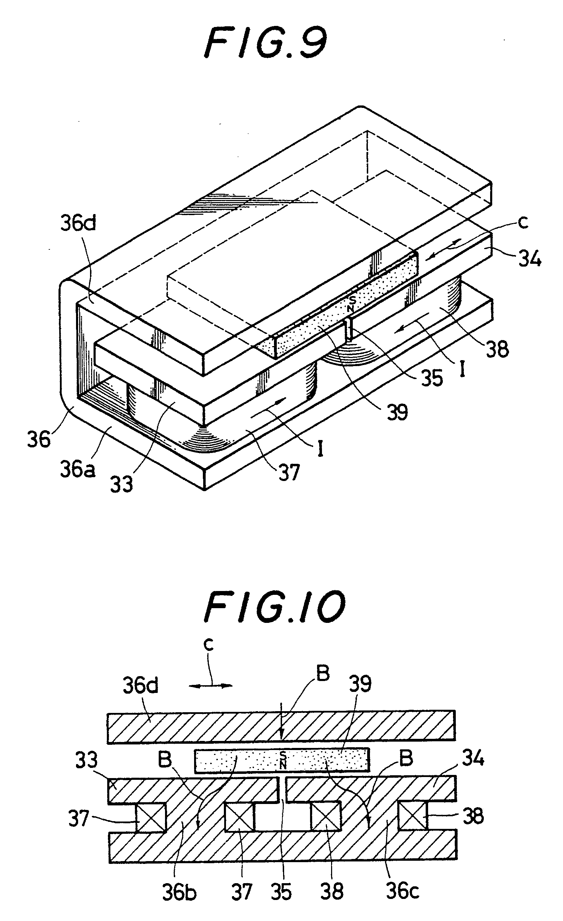

Figures 9 and 10 show the fourth embodiment, wherein a gap 35 is provided between yokes 33 and 34, which are connected to the lower flange 36a of a U-shaped yoke 36 by respective connecting portions 36b and 36c, and coils 37 and 38 are wound around the respective connecting portions 36b and 36c. A magnet 39 is provided between the yokes 33 and 34 and the upper flange 36d of the yoke 36, and is so spaced from the yokes 33, 34 and 36 so as to be movable in the directions of an arrow c in Figure 10. Thus, the magnet 39 is moved upon the same principle as described in the first to third embodiments.

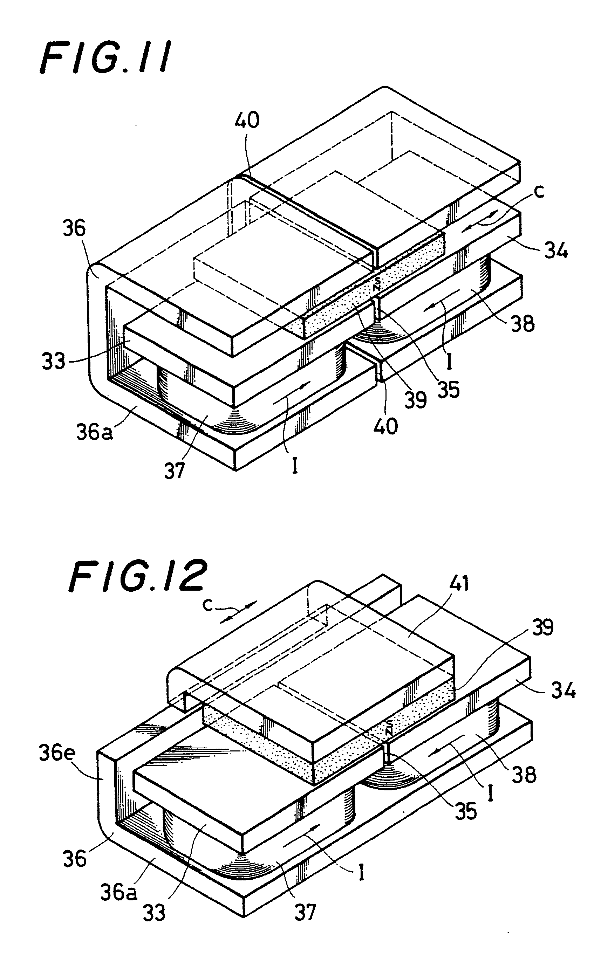

Figure 11 shows the fifth embodiment, similar to the fourth embodiment, but with a gap 40 in the yoke 36 in alignment with the gap 35.

In the fourth and fifth embodiments shown in Figures 9 and 10, and in Figure 11, the magnet 39 is supported by an external means.

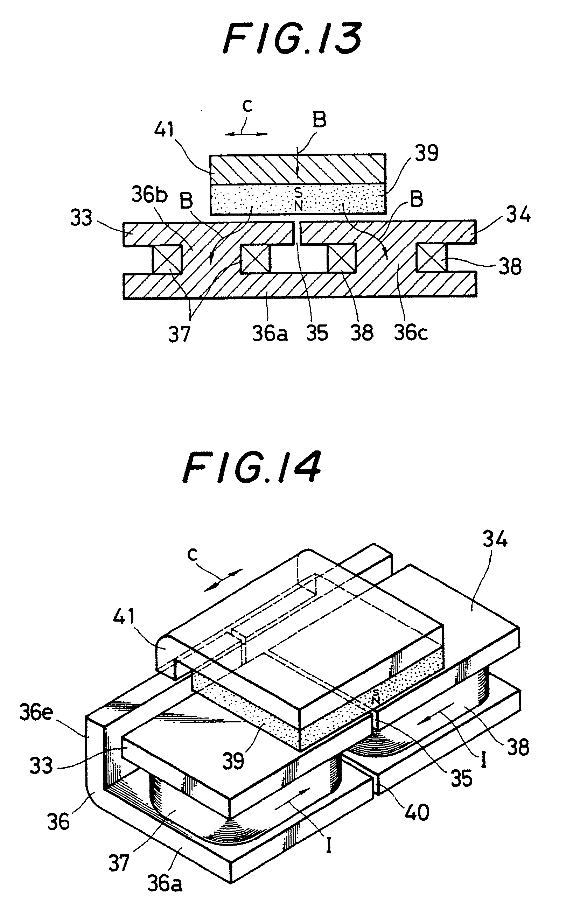

Figures 12 and 13 show the sixth embodiment. In this embodiment, the yokes 33 and 34 are spaced apart by the gap 35, and the yoke 36 has an L-shaped section with a vertical flange 36e. The horizontal lower flange 36a of the yoke 36 is combined with the yokes 33 and 34 by the connecting portions 36b and 36c, around which the coils 37 and 38 are respectively wound. The magnet 39, which is fixed to a yoke 41 is spaced by a predetermined gap from the yokes 33 and 34, is moved in the directions of the arrow c as it is in the other embodiments.

Figure 14 shows the seventh embodiment, wherein a gap 40 is provided in the yoke 36. In this embodiment, the yoke 36 is divided into two due to the gaps 35 and 40, and is fixed to a base plate to keep the widths of the gaps 35 and 40 constant. By linearly arranging a number of the divided yokes 36, it is possible to make the range of movement of the magnet 39 larger.

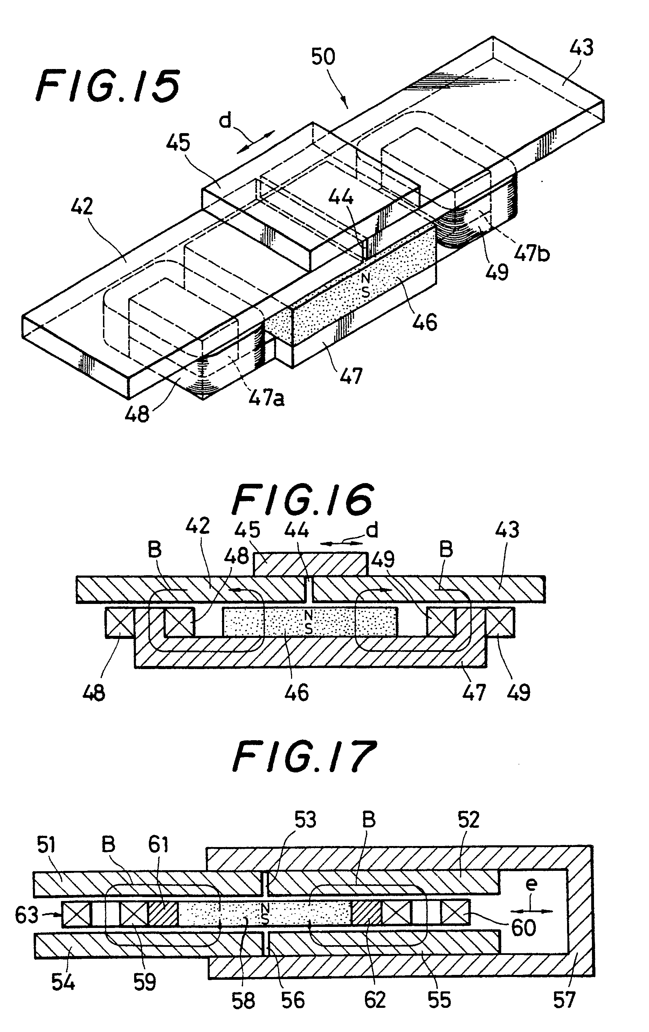

Figures 15 and 16 show the eighth embodiment. In this embodiment, a gap 44 is provided between two yokes 42 and 43 which are connected to each other by a member 45 made of non-magnetic material, and a magnet 46 is provided in opposed relation to the yokes 42 and 43 and the gap 44, so as to be spaced from the yokes 42 and 43 and the gap 44 by a predetermined gap.

The magnet 46 is fixed to a yoke 47, around end portions 47a and 47b of which respective coils 48 and 49 are wound. A movable portion 50 comprising the yokes 42 and 43 and the member 45 is supported by an external means in order to keep the gap 44 constant, and moves in the directions of an arrow d.

Figure 17 shows the ninth embodiment. A gap 53 is provided between two yokes 51 and 52, in opposed relation with which two yokes 54 and 55 are so arranged as to be spaced apart the width of a gap from the yokes 51, 52 and the gap 53, and further, the yokes 51, 52, 54 and 55 are connected by a connecting member 57 of U-shaped section and of non-magnetic material. A movable portion 63 comprises a magnet 58 and coils 59 and 60 secured to the respective ends of the magnet 58 through members 61 and 62 made of non-magnetic material, and is movable in the directions of an arrow e within the gap formed between the yokes 51 and 52, and the yokes 54 and 55. The movable portion 63 is supported by an external means in order to keep the gap constant.

In the fourth to ninth embodiments, movement of the movable portion is based on the same principle as described for the first to third embodiments, and the above-mentioned effects (1) to (5) are also obtained.

In embodiments of the invention, it is possible not only to make the flux density within the gaps higher, but also to prevent the concentration of flux, so as to obtain a uniform distribution of flux. Hence, it is easy to make the yoke thin, so as to make the linear motor compact and light, and obtain a linear motor having a high thrust. Moreover, it is possible to make the inductance of the coil small, and to make a linear motor with excellent high speed response. In addition, the coil functions effectively, and thermal radiation from the coil is improved, so again a linear motor can be made compact and to have a high thrust, and the electric power consumption thereof can be small and the assembly operation easy.

## Claims

1. A linear motor comprising:
   a first yoke (19);
   a second yoke (20) spaced by a first gap (25) of predetermined width from said first yoke (19);
   a magnet (14) in opposed relation to and spaced by a second gap (27, 28) of predetermined width from said first and second yokes (19, 20);
   a third yoke (13) spaced by a third gap from said first and second yokes (19, 20); and
   a base plate (24) to which said first and second yokes (19, 20) are secured and which has a guide portion (22, 23) for guiding a guided portion (16, 17, 18) of said third yoke (13);
   wherein respective coils (21, 29) are wound around said first yoke (19) and said second yoke (20).

2. A linear motor comprising:
   a first yoke (19);
   a second yoke (20) spaced by a first gap (25) of predetermined width from said first yoke (19);
   a coil (21) wound around at least one of said first yoke (19) and said second yoke (20); and
   a magnet (14) in opposed relation to and spaced by a second gap (27, 28) of predetermined width from said first and second yokes (19, 20);
   wherein an end portion of said magnet (14) extends over said first gap (25) and is positioned in opposed relation with not only one of said first and second yokes (19, 20), but also a part of the other (19, 20) thereof when said magnet (14) is in an end or starting position.

3. A linear motor comprising:
   a first yoke (19);
   a second yoke (20) spaced by a first gap (25) of predetermined width from said first yoke (19);
   a coil (21) wound around at least one of said first yoke (19) and said second yoke (20); and
   a magnet (14) in opposed relation to and spaced by a second gap (27, 28) of predetermined width from said first and second yokes (19, 20);
   wherein said coil (21) is wound around said first yoke (19), and a third yoke (13) is spaced by a third gap from said first and second yokes (19, 20).

4. A linear motor comprising:
   a first yoke (33);
   a second yoke (34) spaced by a first gap (35) of predetermined width from said first yoke (33);
   a third yoke (36) of substantially U-shaped section;
   said first yoke (33) and said second yoke (34) being arranged within said third yoke (36);
   two connecting members (36b, 36c) connecting one (36a) of the parallel flanges of said third yoke (36) to said first yoke (33) and said second yoke (34), respectively;
   two coils (37, 38) respectively wound around said connecting members (36b, 36c); and
   a magnet (39) spaced from and movable between the other (36d) of said parallel flanges of said third yoke (36) and said first and second yokes (33, 34).

5. A linear motor according to claim 4 wherein gaps (40) are so provided in said respective parallel flanges (36a, 36d) of said third yoke (36) as to be aligned with said first gap (35).

6. A linear motor according to claim 4 wherein said other (36d) of the parallel flanges (36a, 36d) is omitted, and a fourth yoke (41) is secured to said magnet (39).

7. A linear motor according to claim 6 wherein a gap (40) is provided in said one (36a) of the parallel flanges (36a, 36d) so as to be aligned with said first gap (35).

8. A linear motor comprising:
   a first yoke (42);
   a second yoke (43) spaced by a first gap (44) of predetermined width from said first yoke (42);
   a member (45) of non-magnetic material connecting said first yoke (42) to said second yoke (43);
   a magnet (46) spaced by a second gap of predetermined width from and arranged in opposed relation to said first yoke (42) and said second yoke (43); and
   a third yoke (47) to which said magnet (46) is fixed and in each end portion (47a, 47b) of which a core is provided on which a respective coil (48, 49) is wound.

9. A linear motor comprising:
a first yoke (51) and a second yoke (52) spaced by a first gap (53) from each other; a magnet (58) spaced by a second gap from and arranged in opposed relation to said first yoke (51) and second yoke (52); a coil (59, 60) fixed to the end of said magnet (58) through a non-magnetic material (61, 62); a third yoke (54) and a fourth yoke (55) spaced from each other by a gap (56) of the same width as said first gap (53) and so arranged in opposed relation to said magnet (58) as to be spaced apart by a gap of the same width as that of said second gap from said magnet (58); and a member (57) of non-magnetic material of substantially U-shaped section connecting said first and second yokes (51, 52) to said third and fourth yokes (54, 55).

10. A linear motor comprising:
a yoke unit including a first yoke (19) which a coil (21) surrounds, and a second yoke (20) so arranged as to be in the same plane with and spaced apart the width of a first gap (25) from said first yoke (19); and a magnet (14) spaced apart the width of a second gap from and arranged in opposed relation to said yoke unit; a plurality of said yoke units being spaced apart by the same width as that of said first gap from one another and arranged in a row or two-dimensionally.

11. A linear motor according to claim 11 wherein a front end portion of said magnet (14) extends from one of said first yoke (19) and said second yoke (20) to the other thereof over said first gap (25), and said magnet (14) is arranged to be in opposed relation to said one of the first yoke (19) and the second yoke (20) and the part of said other thereof, when said magnet (14) is at an end or starting position.

## Revendications

1. Moteur linéaire comportant :
un premier bloc (19);
un deuxième bloc (20) espacé par un premier entrefer (25) de largeur prédéterminée du dit premier bloc (19);
un aimant (14) en relation opposée aux et espacé par un deuxième entrefer (27, 28) de largeur prédéterminée des dits premier et deuxième blocs (19, 20);
un troisième bloc (13) espacé par un troisième entrefer des dits premier et deuxième blocs (19, 20); et
une plaque de base (24) sur laquelle sont fixés les dits premier et deuxième blocs (19, 20) et qui possède une partie de guidage (22, 23) destinée à guider une partie guidée (16, 17, 18) du dit troisième bloc (13);
dans lequel des bobines respectives (21, 29) sont enroulées sur le dit premier bloc (19) et sur le dit deuxième bloc (20).

2. Moteur linéaire comportant :
un premier bloc (19);
un deuxième bloc (20) espacé par un premier entrefer (25) de largeur prédéterminée du dit premier bloc (19);
une bobine (21) enroulée sur au moins l'un des dits premier bloc (19) et deuxième bloc (20); et
un aimant (14) en relation opposée aux et espacé par un deuxième entrefer (27, 28) de largeur prédéterminée des dits premier et deuxième blocs (19, 20);
dans lequel une partie d'extrémité du dit aimant (14) s'étend sur le dit premier entrefer (25) et est positionnée en relation opposée à non seulement l'un des dits premier et deuxième blocs (19, 20), mais également à une partie de l'autre bloc (19, 20) lorsque le dit aimant (14) est dans une position d'extrémité ou de départ.

3. Moteur linéaire comportant :
un premier bloc (19);
un deuxième bloc (20) espacé par un premier entrefer (25) de largeur prédéterminée du dit premier bloc (19);
une bobine (21) enroulée sur au moins l'un des dits premier bloc (19) et deuxième bloc (20); et
un aimant (14) en relation opposée aux et espacé par un deuxième entrefer (27, 28) de largeur prédéterminée des dits premier et deuxième blocs (19, 20);
dans lequel la dite bobine (21) est enroulée sur le dit premier bloc (19), et un troisième bloc (13) est espacé par un troisième entrefer des dits premier et deuxième blocs (19, 20).

4. Moteur linéaire comportant :
un premier bloc (33);
un deuxième bloc (34) espacé par un premier entrefer (35) de largeur prédéterminée du dit premier bloc (33);
un troisième bloc (36) de section sensiblement en U;
le dit premier bloc (33) et le dit deuxième bloc (34) étant disposés à l'intérieur du dit troisième bloc (36);
deux éléments de raccordement (36b, 36c) reliant un (36a) des rebords parallèles du dit troisième bloc (36) respectivement au dit premier bloc (33) et au dit deuxième bloc (34);

deux bobines (37, 38) enroulées respectivement sur les dits éléments de raccordement (36b, 36c); et

un aimant (39) espacé de et mobile entre l'autre (36d) des dits rebords parallèles du dit troisième bloc (36) et des dits premier et deuxième blocs (33, 34).

5. Moteur linéaire selon la revendication 4, dans lequel des entrefers (40) sont prévus dans les dits rebords parallèles respectifs (36a, 36d) du dit troisième bloc (36) de façon à être aligné avec le dit premier entrefer (35).

6. Moteur linéaire selon la revendication 4, dans lequel le dit autre (36d) des rebords parallèles (36a, 36d) est omis, et un quatrième bloc (41) est fixé au dit aimant (39).

7. Moteur linéaire selon la revendication 6, dans lequel un entrefer (40) est prévu dans l'un (36a) des rebords parallèles (36a, 36d) de façon à être aligné avec le dit premier entrefer (35).

8. Moteur linéaire comportant :
un premier bloc (42);
un deuxième bloc (43) espacé par un premier entrefer (44) de largeur prédéterminée du dit premier bloc (42);
un élément (45) en matériau non magnétique reliant le dit premier bloc (42) au dit deuxième bloc (43);
un aimant (46) espacé par un deuxième entrefer de largeur prédéterminée des et en relation opposée au dit premier bloc (42) et au dit deuxième bloc (43); et
un troisième bloc (47) auquel est fixé le dit aimant (46) et dans chaque partie d'extrémité (47a, 47b) duquel est prévu un noyau sur lequel est enroulée une bobine respective (48, 49).

9. Moteur linéaire comportant :
un premier bloc (51) et un deuxième bloc (52) espacés par un premier entrefer (53) l'un de l'autre;
un aimant (58) espacé par un deuxième entrefer des et en relation opposée au dit premier bloc (51) et au dit deuxième bloc (52);
une bobine (59, 60) fixée à l'extrémité du dit aimant (58) par l'intermédiaire d'un matériau non magnétique;
un troisième bloc (54) et un quatrième bloc (55) espacés l'un de l'autre d'un entrefer (56) de la même largeur que le dit premier entrefer (53) et disposés en relation opposée au dit aimant (58) de façon à être espacés d'un entrefer de la même largeur que le dit deuxième entrefer du dit aimant (58); et

un élément (57) en matériau non magnétique de section sensiblement en U reliant les dits premier et deuxième blocs (51, 52) aux dits troisième et quatrième blocs (54, 55).

10. Moteur linéaire comportant :
une unité de bloc comprenant un premier bloc (19) qu'entoure une bobine (21), et un deuxième bloc (20) disposé de façon à être dans le même plan que et espacé de la largeur d'un premier entrefer (25) du dit premier bloc (19); et

un aimant (14) espacé de la largeur d'un deuxième entrefer de et disposé en relation opposée à la dite unité de bloc;

plusieurs des dites unités de bloc étant espacées de la même largeur que le dit premier entrefer l'une de l'autre et disposées en une rangée ou dans deux dimensions.

11. Moteur linéaire selon la revendication 11, dans lequel une partie d'extrémité avant du dit aimant (14) s'étend de l'un des dits premier bloc (19) et deuxième bloc (20) vers l'autre par dessus le dit premier entrefer (25), et le dit aimant (14) est disposé de façon à être en relation opposée à l'un des dits premier bloc (19) et deuxième bloc (20) et à la partie de l'autre lorsque le dit aimant (14) est dans une position d'extrémité ou de départ.

**Patentansprüche**

1. Linearmotor, der umfaßt:
ein erstes Joch (19),
ein zweites Joch (20), das durch einen ersten Spalt (25) vorbestimmter Breite einen Abstand von dem ersten Joch (19) aufweist,
einen Magneten (14), der dem ersten und dem zweiten Joch (19, 20) gegenüberliegend angeordnet ist und von diesen durch einen zweiten Spalt (27, 28) vorbestimmter Breite einen Abstand aufweist,
ein drittes Joch (13), das durch einen dritten Spalt einen Abstand von dem ersten und dem zweiten Joch (19, 20) aufweist, und
eine Grundplatte (24), an der das erste und das zweite Joch (19, 20) befestigt sind und die einen Führungsteil (22, 23) zum Führen eines geführten Teils (16, 17, 18) des dritten Jochs (13) hat,
wobei betreffende Spulen (21, 29) um das erste Joch (19) und das zweite Joch (20) gewik-

kelt sind.

2. Linearmotor, der umfaßt:

ein erstes Joch (19),

ein zweites Joch (20), das durch einen ersten Spalt (25) vorbestimmter Breite einen Abstand von dem ersten Joch (19) aufweist,

eine Spule (21), die um zumindest eines der ersten (19) und zweiten (20) Joche gewickelt ist, und

einen Magneten (14), der dem ersten und dem zweiten Joch (19, 20) gegenüberliegend angeordnet ist und von diesen durch einen zweiten Spalt (27, 28) vorbestimmter Breite einen Abstand aufweist,

wobei ein Endteil des Magneten (14) sich über den ersten Spalt (25) erstreckt und nicht nur einem der ersten und zweiten Joche (19, 20) gegenüberliegend positioniert ist, sondern auch einem Teil des anderen (19, 20) davon, wenn sich der Magnet (14) in einer End- oder Startposition befindet.

3. Linearmotor, der umfaßt:

ein erstes Joch (19),

ein zweites Joch (20), das durch einen ersten Spalt (25) vorbestimmter Breite einen Abstand von dem ersten Joch (19) aufweist,

eine Spule (21), die um zumindest eines der ersten (19) und zweiten (20) Joche gewickelt ist, und

einen Magneten (14), der den ersten und zweiten Jochen (19, 20) gegenüberliegt und von diesen durch einen zweiten Spalt (27, 28) vorbestimmter Breite einen Abstand aufweist,

wobei die Spule (21) um das erste Joch (19) gewickelt ist und ein drittes Joch (13) durch einen dritten Spalt von den ersten und zweiten Jochen (19, 20) einen Abstand aufweist.

4. Linearmotor, der umfaßt:

ein erstes Joch (33),

ein zweites Joch (34), das durch einen ersten Spalt (35) vorbestimmter Breite einen Abstand von dem ersten Joch (33) aufweist,

ein drittes Joch (36) mit im wesentlichen U-förmigem Profil,

wobei das erste Joch (33) und das zweite Joch (34) innerhalb des dritten Jochs (36) angeordnet sind,

zwei Verbindungsteile (36b, 36c), die einen (36a) von den parallelen Schenkeln des dritten Jochs (36) mit dem ersten Joch (33) bzw. dem zweiten Joch (34) verbinden,

zwei Spulen (37, 38), die jeweils um die Verbindungsteile (36b, 36c) gewickelt sind, und

einen Magneten (39), der einen Abstand von dem anderen der parallelen Schenkel des dritten Jochs (36) und den ersten und zweiten Jochs (33, 34) aufweist und zwischen dem anderen Schenkel und den ersten und zweiten Jochs bewegbar ist.

5. Linearmotor nach Anspruch 4, bei dem Spalte (40) derart in den betreffenden parallelen Schenkeln (36a, 36d) des dritten Jochs (36) vorgesehen sind, daß sie mit dem ersten Spalt (35) ausgerichtet verlaufen.

6. Linearmotor nach Anspruch 4, bei dem der andere (36d) der parallelen Schenkel (36a, 36d) fortgelassen ist und ein viertes Joch (41) an dem Magneten (39) befestigt ist.

7. Linearmotor nach Anspruch 6, bei dem ein Spalt (40) derart in dem einen (36a) der parallelen Schenkel (36a, 36d) vorgesehen ist, daß er mit dem ersten Spalt (35) ausgerichtet verläuft.

8. Linearmotor, der umfaßt:

ein erstes Joch (42),

ein zweites Joch (43), das durch einen ersten Spalt (44) vorbestimmter Breite einen Abstand von dem ersten Joch (42) aufweist,

ein Teil (45) aus nichtmagnetischem Material, das das erste Joch (42) mit dem zweiten Joch (43) verbindet,

einen Magneten (46), der durch einen zweiten Spalt vorbestimmter Breite einen Abstand von dem ersten Joch (42) und dem zweiten Joch (43) aufweist und diesen gegenüberliegt, und

ein drittes Joch (47), an dem der Magnet (46) befestigt ist und bei dem in jedem Endteil (47a, 47b) desselben ein Kern vorgesehen ist, auf den eine betreffende Spule (48, 49) gewikkelt ist.

9. Linearmotor, der umfaßt:

ein erstes Joch (51) und ein zweites Joch (52), die durch einen ersten Spalt (53) einen Abstand voneinander aufweisen,

einen Magneten (58), der durch einen zweiten Spalt von dem ersten Joch (51) und dem zweiten Joch (52) einen Abstand aufweist und diesen gegenüberliegend angeordnet ist,

eine Spule (59, 60), die an dem Ende des Magneten (58) durch ein nichtmagnetisches Material (61, 62) befestigt ist,

ein drittes Joch (54) und ein viertes Joch (55), die durch einen Spalt (56) derselben Breite wie derjenigen des ersten Spalts (53) einen Abstand voneinander aufweisen und derart dem Magneten (58) gegenüberliegend angeordnet sind, daß sie durch einen Spalt derselben Breite wie derjenigen des zweiten Spalts einen Abstand von dem Magneten (58) aufweisen, und

ein Teil (57) aus einem nichtmagnetischen Material mit im wesentlichen U-förmigem Profil, das die ersten und zweiten Joche (51, 52) mit den dritten und vierten Jochen (54, 55) verbindet.

10. Linearmotor, der umfaßt:

eine Jocheinheit, die ein erstes Joch (19), das von einer Spule (21) umgeben ist, und ein zweites Joch (20) enthält, welches derart angeordnet ist, daß es in derselben Ebene mit dem ersten Joch (19) liegt und von diesem um die Breite eines ersten Spalts (25) einen Abstand aufweist, und

einen Magneten (14), der um die Breite eines zweiten Spalts einen Abstand von der Jocheinheit aufweist und dieser gegenüberliegend angeordnet ist,

wobei eine Vielzahl der Jocheinheiten um dieselbe Breite wie derjenigen des ersten Spalts einen Abstand voneinander aufweisen und in einer Reihe oder zweidimensional angeordnet sind.

11. Linearmotor nach Anspruch 10, bei dem sich ein vorderer Endteil des Magneten (14) von einem der ersten und zweiten Joche (19, 20) zu dem anderen hin über den ersten Spalt (25) erstreckt und der Magnet (14) angeordnet ist, um dem einen der ersten und zweiten Joche (19, 20) und einem Teil des anderen davon gegenüber zu liegen, wenn sich der Magnet (14) in einer End- oder Startposition befindet.

# FIG.1

# FIG.2

# FIG.3

## FIG.4

## FIG.5

## FIG.6

## FIG.7

EP 0 221 735 B1

# FIG.8

# FIG.9

# FIG.10

FIG.11

FIG.12

## FIG.13

## FIG.14

## FIG.15

## FIG.16

## FIG.17